# EUROPEAN PATENT SPECIFICATION

(11) **EP 2 444 175 B1**
(45) Date of publication and mention of the grant of the patent: **25.06.2014**
(21) Application number: 11186046.6
(22) Date of filing: 20.10.2011
(51) Int. Cl.: B21D 53/34, B21H 1/04, F16D 65/08, B23P 15/18, F16D 69/04

(54) **Method for manufacturing shoes for motor vehicle braking systems**
Verfahren zur Herstellung von Bremsbacken eines Bremssystems für Kraftfahrzeuge
Procédé de fabrication de patins de frein d'un système de freinage d'un véhicule à moteur

(30) Priority: 20.10.2010 IT TO20100849
(43) Date of publication of application: 25.04.2012
(73) Proprietor: Agla Power Transmission S.p.a., Avigliana (IT)
(72) Inventor: Bonu', Oscar, 10051 Avigliana (IT)
(74) Representative: D'Angelo, Fabio

(56) References cited:
- EP-A1- 0 594 927
- GB-A- 2 200 060
- JP-A- 2001 340 932
- US-A1- 2003 057 039
- US-B1- 6 536 253
- US-B1- 6 745 453

## Description

The present invention relates to a method for manufacturing shoes for motor vehicle braking systems, in particular for drum braking systems, to which explicit reference will be made in the following description without therefore loosing in generality.

It is known in the automotive sector the use of shoes of the aforesaid type comprising a flat main, essentially curvilinear, strip-shaped metal sheet body delimited by a first convex arc of circumference shaped side, by a second side opposite to a prevalently convex profile facing the first side, and by opposite end edges transversally connecting the opposite ends of the first side to the corresponding opposite ends of the second side.

Such shoes further comprise a secondary body constituted by a curvilinear metal sheet extending along the first convex side of the main body projecting orthogonally from both opposite faces of the latter and having a constant height in the aforesaid direction of projection. In practice, the secondary body defines a sort of edge in relief of the main body extending along the first convex side of the latter.

The known shoes are obtained by shearing the main body and the secondary body, which are then joined to each other by welding, from sheet metal. More specifically, the secondary body is folded along the first convex side of the main body and is joined thereto by means of spot welding.

The above-described method is relatively long and complex and implies relatively high costs. Furthermore, the shoes thus obtained may be subject to fatigue breakage due to the strains which are created in the welding zones by effect of the normal expansions to which such shoes are subjected while working.

US 2003/057039A1 discloses a method as defined in the preamble of claim 1.

It is the object of the present invention to create a method for manufacturing shoes for motor vehicle braking systems which allows to simply and cost-effectively solve the drawbacks related to the known methods specified above.

The above-mentioned object is achieved by the present invention in that it relates to a method for manufacturing shoes for motor vehicle braking systems as defined in claim 1.

For a better understanding of the present invention, a preferred embodiment will now be described by way of non-limitative example only, and with reference to the accompanying drawings, in which:
- figure 1 is a front view of a shoe for a motor vehicle braking system made by means of the method object of the present invention;
- figure 2 shows, in two axial half sections arranged side-by-side, corresponding to two different operating conditions, a shearing unit for making a perforated disc according to the method object of the present invention;

- figures 3 and 4 show, in axial half section and two different operating conditions, a unit for carrying out a rolling operation on the perforated disc obtained during the previous operation according to the method object of the present invention;
- figures 5 and 6 show, in axial section and two different operating conditions, a shearing unit for carrying out a shearing operation on the semifinished product obtained during the preceding step of rolling according to the method object of the present invention;
- figure 7 is a front view of the semifinished product obtained from the rolling operation with indication of the part removed during the subsequent shearing operation;
- figures 8 and 9 show, in axial section and two different operating conditions, a forming unit for carrying out a sizing operation on the semifinished product obtained during the preceding step of shearing according to the method object of the present invention;
- figures 10 and 11 illustrate, in axial section and two different operating conditions, a shearing unit for carrying out a further shearing operation on the semifinished product obtained during the preceding step of sizing according to the method object of the present invention; and

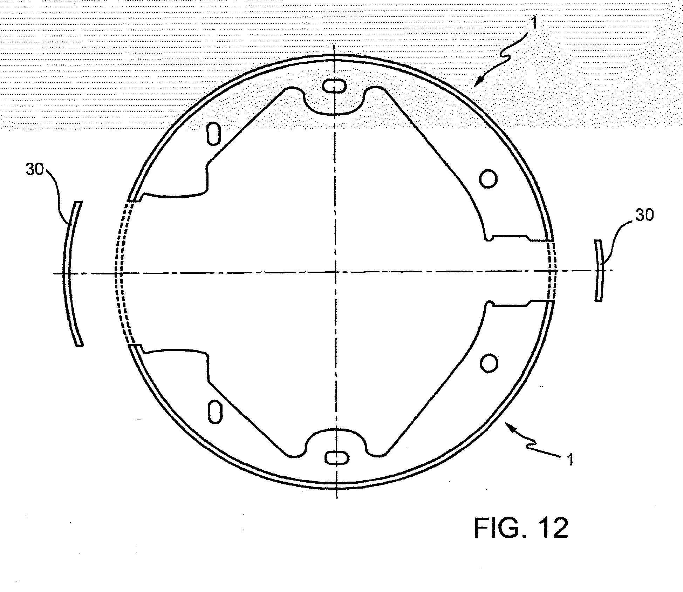

- figure 12 is a front view of two finished shoes obtained at the end of the shearing operation carried out in the unit in figures 10 and 11.

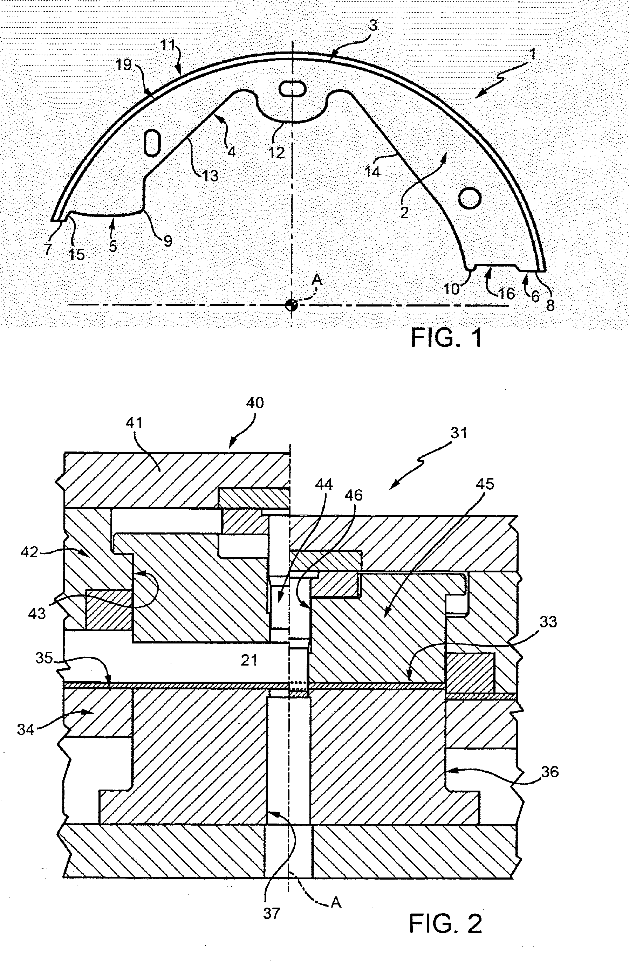

With reference to figure 1, numeral 1 indicates as a whole a shoe for motor vehicle braking systems, in particular for drum braking systems, obtained by means of the method object of the present invention.

The shoe 1 is advantageously made in one piece and comprises a curvilinear strip plate 2 delimited by a first convex arc of circumference side 3 with axis A, by a second side 4 opposite to the mainly concave profile and facing side 3, and by opposite end edges 5, 6 transversally connecting the opposite ends 7, 8 of side 3 to corresponding opposite ends 9, 10 of side 4. The shoe 1 further comprises a curvilinear sheet 11 extending along side 3, projecting orthogonally from both opposite faces of the plate 2 and having a constant height in the aforesaid direction of projection. In practice, the plate 11 defines a sort of edge in relief 19 of the plate 2 extending along the edge 3 of the latter.

As shown in figure 1, side 4 comprises an intermediate convex portion 12 projecting towards axis A, and opposite side portions 13, 14 diverging with respect to side 3 starting from the intermediate portion 12.

In particular, the side portion 13 has a nearly rectilinear pattern defining a sort of line broken near the end edge 5; the side portion 14, having longer length than the side portion 13, also has a rectilinear pattern but which ends in this case with a curvilinear segment near the end edge 6.

It is further worth noting that the end edge 5 has a slightly convex profile and defines, in the junction zone with side 3, a prominence 15 projecting in the direction of extension of side 3 itself; the end edge 6 has instead an essentially rectilinear pattern and defining a recess 16.

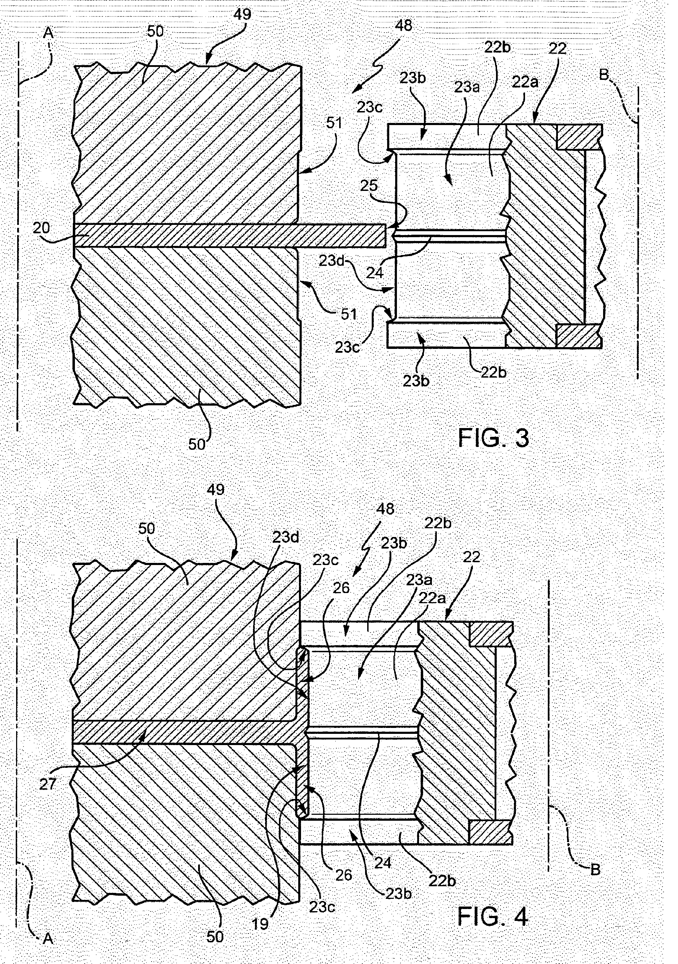

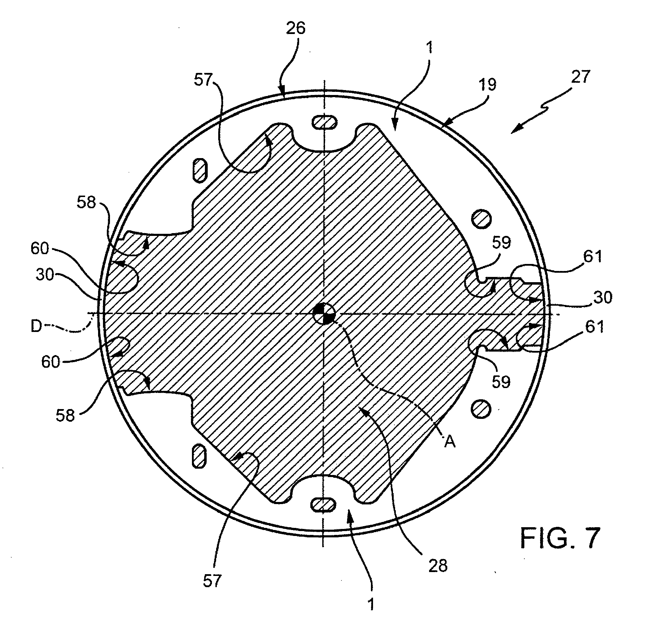

The shoe 1 is obtained starting from a circular disc 20 (figures 2 and 3) of axis A having a central hole 21 by means of the following steps:
- radially advancing, towards the disc 20, a roller 22 having an axis B parallel to axis A and having a main portion 22a delimited by an external cylindrical surface 23a having axial extension greater than that of the disc 20 itself and provided, in an intermediate position, with a pointed annular rib 24 (figure 3);
- radially incising a peripheral edge 25 of the disc 20 with the rib 24 of the roller 22 so as to divide the material forming such a peripheral edge into two annular fins 26 orthogonally and overhangingly projecting from respective opposite faces of the disc 20 (figure 4 and 7) and obtaining a semifinished discoidal product 27;
- performing a shearing operation to remove from the semifinished product 27 an inner profiled core 28 and obtaining two shoes 1 arranged symmetrically on opposite sides of a given diameter D of the semifinished product 27 itself and joined to one another by peripheral connection portions 30 (figures from 5 to 7); and
- removing by means of another shearing operation the peripheral connection portions 30 to obtain two distinct shoes 1 (figures from 10 to 12).

In the illustrated case in hand, the disc 20 is obtained by means of a shearing operation from metal sheet made on a shearing unit 31 (figure 2).

In particular, the sheet to be sheared is positioned on a fixed tubular die 32 with axis A, having a flat head surface 33, and on a mobile annular member 34, also having a flat head surface 35, coupled in axially sliding manner on an external cylindrical surface 36 of the die 32 and initially maintained in a position in which the head surface 35 is arranged coplanar with the head surface 33.

More specifically, the die 32 internally defines a central through hole 37, having a diameter corresponding to the hole 21 to be formed on the disc 20.

The unit 31 further comprises a punch unit 40 adapted to cooperate with the die 32 and an annular member 34 for separating the disc 20 from the metal sheet and to form the through hole 21.

In particular, the punch unit 40 comprises a supporting member 41, to which are overhangingly fixed, coaxially to axis A, a first tubular punch 42 delimiting a central through hole 43 of diameter equal to the external diameter of the disc 20 to be formed, and a second cylindrical punch 44 of external diameter equal to the diameter of the hole 21 to be made on the disc 20 and arranged in the punch 42 at a predetermined radial distance from the wall of the hole 43.

The punch unit 40 further comprises a mobile tubular shaped member 45, coupled in axially sliding manner with the punches 42 and 44. In particular, the mobile member 45 engages the hole 43 of the punch 42 and has a central hole 46, in turn, engaged by the punch 44.

The mobile member 45 is available in a first extracted operating position (figure 2, left side), in which it projects axially towards the metal sheet to be sheared with respect to the punches 42, 44, and a second retracted operating position (figure 2, right side), in which it is axially retracted with respect to the punches 42, 44 themselves.

In practice, when the punch unit 40 is carried in contact with the metal sheet to be sheared, the relative movement between the mobile member 45 and the punches 42, 44 determines the separation of the disc 20 from the metal sheet itself and the formation of the hole 21.

With reference to figures 3 and 4, the aforesaid steps of advancing and incising are carried out by means of the rolling unit 48, which is essentially formed by a roller 22 and by locking/moving equipment 49 of the disc 20 subjected to the action of the roller 22 itself.

In particular, the equipment 49 is adapted to lock the disc 20 in a predetermined radial and axial position and to feed it angularly rotating with respect to axis A, while the roller 22 is actuated in radial direction towards the disc 20 itself so as to deform it plastically.

The equipment 49 essentially comprises a pair of jaws 50, of which one mobile and one fixed, which clamp the disc 20, from axially opposite parts, and define with the roller 22, respective abutment surfaces 51 on which fins 26 are pressed during the step of rolling.

In practice, as previously indicated, the roller 22 incides with a rib 24 thereof the peripheral edge 25 of the disc 20 so as to divide the material forming such an edge into two annular fins 26, which are then subjected to a radial compression action by the roller 22 itself on respective abutment surfaces 51 so as to form the edge in relief 19 about the disc 20 and to thus define the semifinished product 27.

Advantageously, the roller 22 is delimited, at the axial ends thereof opposite along axis B, by respective terminal portions 22b, which axially and radially project from the main portion 22a and are externally delimited by respective cylindrical surfaces 23b defining with respective shoulders 23c the cylindrical surface 23a.

In practice, the end portions 22b and the main portion 22a define a sort of hollow zone 23d of the roller 22 destined to cooperate with the annular fins 26 which are formed on the peripheral edge 25 of the disc 20 by effect of the incision generated by the rib 24.

The hollow zone 23d defines a guide for the deformation of the material forming the peripheral edge 25 of the disc 20 so as to allow to obtain the edge in relief 19 in one rolling operation.

As apparent in figures 3 and 4, the hollow zone 23d defines the axial extension of the edge in relief 19.

It is further worth noting that the shoulders 23c of the roller 22 have a profile with a gradually increasing diameter towards the end portions 22b and slightly concave.

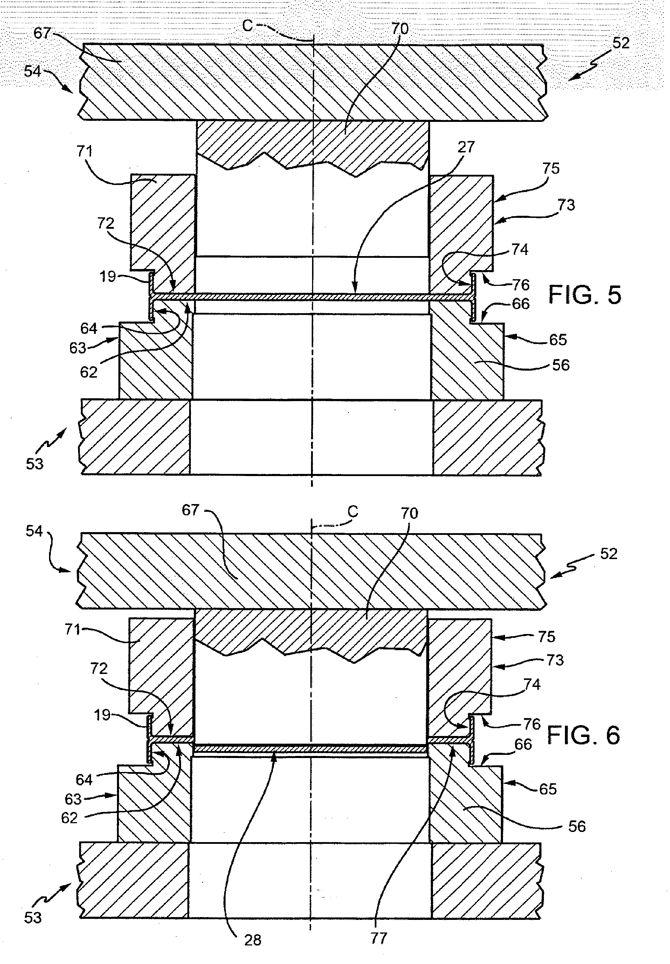

With reference to figures 5 and 6, the subsequent shearing operation to which the semifinished product 27 is subjected is carried out on a shearing unit 52.

In particular, the shearing unit 52 essentially comprises a fixed half die 53, a mobile half die 54 facing the fixed die 53 and cooperating, in use, with the latter along an axis C coaxial to axis A of the semifinished product 27, and an actuating assembly (not shown) of the mobile half die 54 along axis C itself between an opening position (not shown), in which the mobile half die 54 is separated from the fixed half die 53 and allows the insertion of the semifinished product 27, and a closing position (figure 6), in which the mobile half die 5 cooperates with the fixed half die 53.

As apparent in figures 5 and 6, the fixed half die 53 is coaxial to axis C and essentially comprises a tubular shape die 56, internally defining the inner core 28 to be removed from the semifinished product 27.

As apparent in figure 7, the core 28 has a symmetric profile with respect to the diameter D and comprising, on each of the two halves into which it is split by such a diameter, a main portion 57 corresponding to side 4 of the respective shoe 1 being formed, two secondary side portions 58, 59 corresponding to end edges 5 and 6 of the aforesaid shoe 1, and two end portions 60, 61 adjacent to the diameter D and limited by respective segments of the edge in relief 19.

The die 56 is further delimited on top by a flat, horizontal annular surface 62 and laterally outwards by a cylindrical surface 63 formed by two segments 64, 65 of different diameter, joined to each other by another flat annular surface 66 parallel to the annular surface 62. In particular, the segment 64 has a diameter smaller than segment 65 and is arranged above the latter so as to border with the radially outermost edge of the annular surface 62.

As apparent in figures 5 and 6, the main discoidal part of the semifinished product 27 is placed on the annular surface 62 of the die 56, while the edge in relief 19 is placed in frontal contact on the segment 64 of the cylindrical surface 63 and touches with the lower end arranged underneath on the annular surface 66.

The mobile half die 54 essentially comprises a supporting wall 67 and a punch 70 overhangingly carried by the supporting wall 67, externally coaxial to axis C towards the die 56 and having an external profile corresponding to that of the core 28 to be removed from the semifinished product 27. Furthermore, the punch 70 ends towards the die 56 with a flat head surface.

The mobile half die 54 further carries a tubular shape blank holder 71, mounted in axially mobile manner along axis C on the side surface 72 of the punch 70.

In particular, the blank holder member 71 has a cylindrical tubular shape and ends, on the opposite side of the supporting wall 67, with an annular flat head surface 72 adapted to cooperate in use with the discoidal part of the semifinished product 27 from the opposite side of the annular surface 62 of the die 56.

The blank holder member 71, similarly to the die 56, is delimited laterally outwards by a cylindrical surface 73 formed by two segments 74, 75 of different diameter, joined to each other by another flat annular surface 76 parallel to the head surface 72. In particular, the segment 74 has a diameter smaller than the segment 75 and is arranged under the latter so as to border with the radially outermost edge of the head surface 72.

As shown in figures 5 and 6, the semifinished product 27 is secured between the die 56 and the blank holder member 71; in particular, the discoidal part of the semifinished product 27 is clamped between the annular surface 62 of the die 56 and the head surface 72 of the blank holder member 71, while the edge in relief 19 is placed in frontal contact on the segments 64, 74 of the cylindrical surfaces 63, 73 and touches the annular surfaces 66, 76 respectively with the opposite ends thereof.

During the shearing operation, the mobile half die 54 descends axially towards the fixed half die 53 thus causing a relative axial sliding of the punch 70 and the blank holder member 71; the latter always remains in contact with the semifinished product 27, while the punch 70 is inserted in the die 56 so as to remove the inner core 28.

The result is a semifinished product 77 formed by two shoes 1 arranged symmetrically on opposite sides of the aforesaid diameter D and joined to each other by peripheral connection portions 30 defined by respective segments of the edge in relief 19. More specifically, the connection portions 30 are defined by arc-shaped portions of the edge in relief 19 (or by the annular fins 26) facing each other and crossed by the diameter D.

Preferably, before carrying out the subsequent operation of removing the peripheral connection portions 30, the semifinished product 77 is subjected to a sizing operation on the end edges 5, 6 of the two shoes 1 being formed.

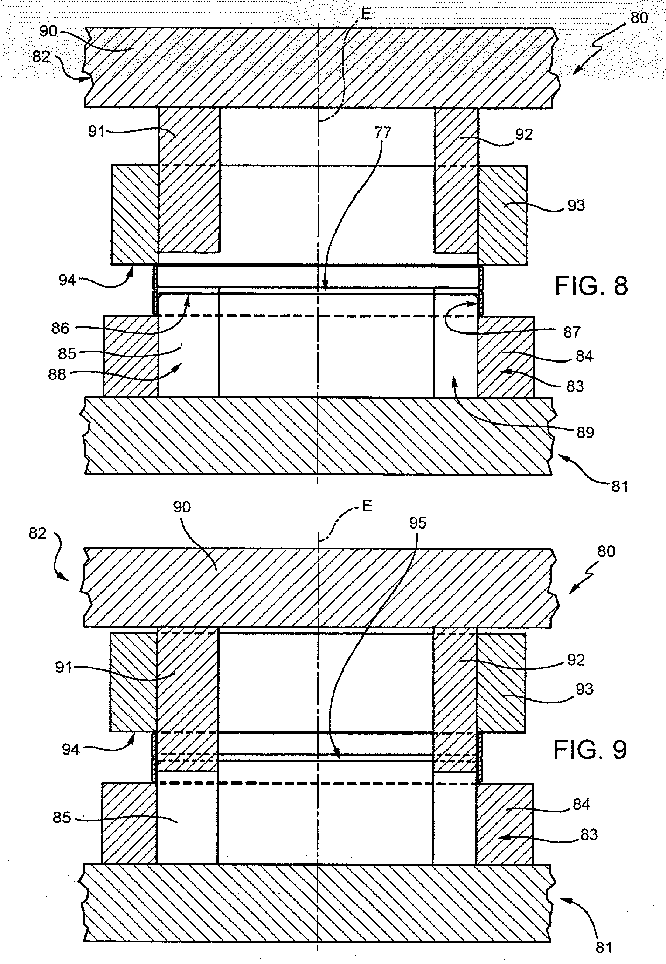

Such an operation is carried out on a forming unit 80 shown in figures 8 and 9, which essentially comprises a fixed half die 81, a mobile half die 82 facing the fixed die 81 and cooperating, in use, with the latter along an axis E coaxial to axis A of the semifinished product 77, and a moving assembly (not shown) of the mobile half die 82 along axis E itself between an opening position (not shown), in which the mobile half die 82 is separated from the fixed half die 81 and allows the insertion of the semifinished product 77, and a closing position (figure 9), in which the mobile half die 5 cooperates with the fixed half die 81.

As apparent from figures 8 and 9, the fixed half die 81 is coaxial to axis E and essentially comprises a die 83 having a radially outermost tubular portion 84 and two curvilinear portions 85 (of which only one is visible in figures 8 and 9), radially extending inside the tubular portion 84, having, in top view, a C or arc-shaped profile symmetrically arranged with respect to one another with respect to diameter D of the semifinished product 77 so as to support from the bottom the respective shoes 1 being formed of the semifinished product 77 itself.

In particular, each curvilinear portion 85 projects towards the mobile half die 82 with respect to the tubular portion 84 and is delimited on the top by a flat surface 86 and laterally outwards by a cylindrical surface 87; such surfaces 86, 87 cooperate in use with the plate 2 of the respective shoe 1 being formed and with the edge in relief 19, respectively.

Each curvilinear portion 85 is further delimited towards the other curvilinear portion 85 by respective frontal surfaces 88, 89 having, in top view, the same profile of the end edges 5, 6 of the respective shoe 1 to be formed.

The mobile half die 82 essentially comprises a supporting wall 90 and a pair of punches 91, 92 overhangingly carried by the supporting wall 90 and extending from diametrically opposite parts of axis E towards the die 83. The punch 91 has an external profile such to allow the engagement of the semifinished product 77 between the end edges 5 of the shoes 1 being formed; similarly, the punch 92 has an external profile such as to allow the engagement of the semifinished product 77 between the end edges 6 of the shoes 1 being formed.

The mobile half die 82 further carries a tubular shaped blank holder 93, mounted in axially mobile manner along axis E on the radially outermost surfaces 91 of the punches 91, 92.

In particular, the blank holder member 93 has a cylindrical tubular shape and ends, on the part opposite to the supporting wall 90, with a flat annular head surface 94.

As apparent in figure 8, the semifinished product 77 is inserted on the forming unit 80 and clamped between the die 83 and the blank holder member 93; in particular, the edge in relief 19 is placed in frontal contact with the surfaces 87 of the curvilinear portions 85 of the die 83 and touches, with the opposite axial ends thereof, the surface 86 of the tubular portion 84 of the die 83 and the head surface 94 of the blank holder member 93, respectively. In the clamping configuration of the semifinished product 77 of figure 8, the blank holder member 93 axially projects towards the fixed half die 81 with respect to the punches 91, 92.

During the sizing operation, the mobile half die 82 axially descends towards the fixed half die 81 obtaining an relative axial sliding of the punches 91, 92 and the blank holder member 93; the latter remains always in contact with the semifinished product 77, while the punches 91, 92 are inserted between the curvilinear portions 85 of the die 83 in the zones under the end edges 5, 6 of the shoes 1 being formed so as to remove the material needed to obtain the required size of the end edges 5, 6 thereof.

In other words, the sizing operation allowed to reduce the end edges 5, 6 of each shoe 1 to the required size.

The result is a semifinished product 95 corresponding to the semifinished product 77 but having the dimensional accuracy sought for the end edges 5 and 6 with respect thereto.

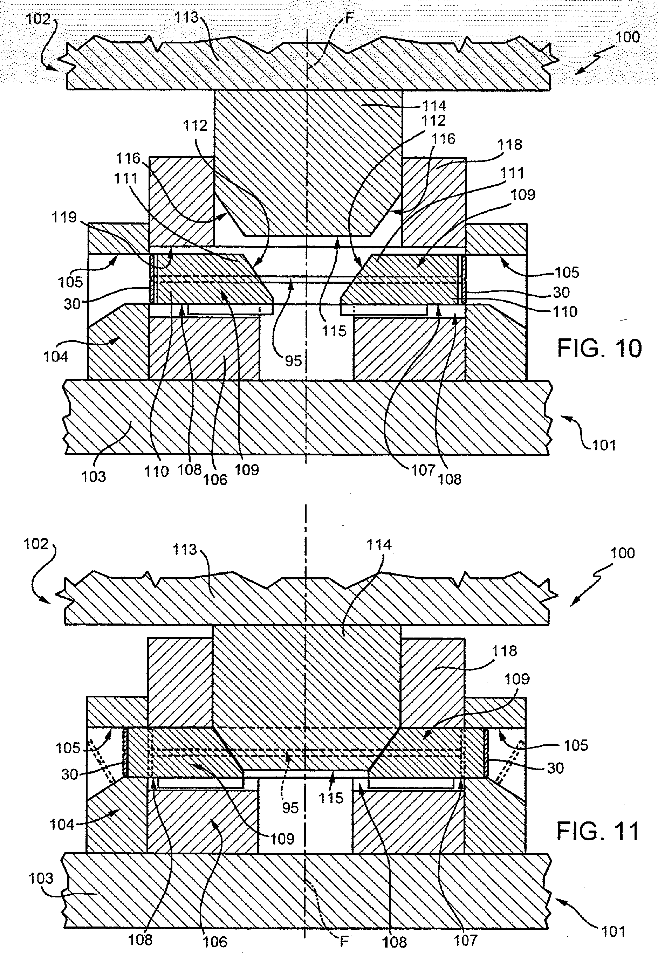

At this point, the semifinished product 95 is subjected to the last shearing operation for removal of the connection portions 30 so as to separate the two shoes 1. Such an operation is carried out on a further forming unit 100, shown in figures 10 and 11, which essentially comprises a fixed half die 101, a mobile half die 102 facing the fixed die 101 and cooperating, in use, with the latter along an axis F coaxial to axis A of the semifinished product 95, and a moving assembly (not shown) of the mobile half die 102 along axis F itself between an opening position (not shown), in which the mobile half die 102 is separated from the fixed half die 101 and allows the insertion of the semifinished product 95, and a closing position (figure 10), in which the mobile half die 5 cooperates with the fixed half die 81.

As apparent in figures 10 and 11, the fixed half die 101 is coaxial to axis F and essentially comprises a base 103, and a tubular shaped die 104, extending axially and overhangingly from the base 103 towards the mobile half die 102 and defining respective radial through openings 105, on diametrically opposite sides along the diameter D of the semifinished product 95 to be processed.

Each radial opening 105 is obtained at a predetermined axial distance from the head surface of the die 104 facing the mobile half die 102 and has an angular size with respect to axis F equal to the angular size of the respective connection portion 30 to be removed from the semifinished product 95.

The fixed half die 101 further comprises a tubular supporting member 106 inserted in the die 104 and having an axial height starting from the base 103 equal to the height from which the radial openings 105 extend.

The supporting member 106 has towards the mobile half die 102, a flat head surface 107 and is provided at the radial openings 105 of the die 104, with respective diametrical grooves 108.

The fixed half die 101 finally comprises a pair of shearing members 109 mounted on respective grooves 108 of the supporting member 106 in radially sliding manner with respect to axis F.

In particular, each shearing member 109 comprises a cutting portion 110, adapted to cooperate with a respective connection portion 30 to be removed from the semifinished product 95, and a radially innermost control portion 111, defining an oblique plane 112, along which, as will described in greater detail below, the action of the mobile half die 102 is exerted to determine the radial movement of the shearing member 109 itself.

More specifically, the cutting portion 110 of each shearing member 109 is adapted to couple in sliding manner in use within the respective radial opening 105 of the die 104 so as to determine the detachment of the respective connection portion 30 from the rest of the semifinished product 95; the oblique planes 112 of the shearing members 109 are oriented so as to converge towards each other angle axis E and towards the base 103.

The mobile half die 102 essentially comprises a supporting wall 113 and a punch 114 overhangingly carried by the supporting wall 113, extending coaxially to axis F towards the die 104 and having a head wall 115 with oblique opposite faces 116, converging towards each other towards the base 103.

In particular, the faces 116 of the punch 114 are adapted to cooperate in use with the respective oblique planes 112 of the shearing members 109 so as to transform a movement of the mobile half die 102 along axis F into a radial outward movement of the shearing members 109 themselves.

The mobile half die 102 further carries a tubular shaped blank holder member 118, mounted in axially mobile manner along axis F on the external side surface of the punch 114.

In particular, the blank holder member 118 ends from the opposite side of the supporting wall 113, with a flat annular head surface 119 in use adapted to cooperate with the upper surfaces of the shearing members 109.

For executing the shearing operation 95, the semifinished product 95 is placed in the edge in relief 19 thereof resting on the radially outermost peripheral portion of the supporting member 106 and with the connection portions 30 of such edge facing the respective radial openings 105 of the die 104.

At this point, the mobile half die 102 is operated and descends axially towards the fixed half die 101; when the blank holder member 118 comes into contact with the shearing members 109, the subsequent descent of the mobile half die 102 produces a relative axial sliding between the punch 114 and the blank holder member 118 itself; the later remains stationary while the punch 114 is arranged with the faces 116 thereof in contact with the oblique planes 112 of the respective shearing members 109.

Continuing the descent, the axial movement of the punch 114 determines, by means of the interaction between the faces 116 and the respective oblique planes 112, the radial movement of the shearing members 109 which thus remove the connection portions 30, separating the shoes 1 from each other.

From an examination of the features of method according to the present invention the advantages that it allowed to obtain are apparent.

In particular, the method according to the present invention employs the material in optimal manner avoiding waste and, at the same time, allowing to obtain shoes of considerable robustness, because the are made in one piece, without welding or joints which could be the cause of fatigue failure problems.

Furthermore, the described method is simpler and more rapid than the known methods and implies considerable cost reductions.

Finally, it is apparent that changes and variations can be made to the method of the invention without departing from the scope of protection of the claims.

## Claims

1. A method for manufacturing shoes (1) for motor vehicle braking systems, said shoes (1) comprising a curvilinear strip plate (2) and a curvilinear sheet (11) extending along a first convex circumferential boundary side (3) of said plate (2) and orthogonally projecting from both opposite faces of the plate (2), said method being **characterized by** comprising the steps of:
a) forming a circular centrally perforated disc (20) having an axis (A);
b) radially advancing, towards said disc (20), a roller (22) having an axis (B) parallel to the axis (A) of the disc (20) and comprising a main portion (22a) delimited by an external cylindrical surface (23a) having axial extension greater than that of said disc (20) and provided, in an intermediate position, with a pointed annular rib (24);
c) radially incising a peripheral edge (25) of said disc (20) with said rib (24) of said roller (22) so as to divide the material forming said peripheral edge (25) into two annular fins (26) orthogonally and overhangingly projecting from respective opposite faces of said disc (20) and obtaining a semifinished discoidal product (27);
d) performing a shearing operation to remove an inner profiled core (28) from said semifinished product (27) and obtain two shoes (1) arranged symmetrically on opposite sides of a given diameter (D) of the semifinished product (27) and joined to each other by peripheral connection portions (30); and
e) removing said peripheral connection portions (30) by means of another shearing operation to obtain two distinct shoes (1);
said method being **characterized in that** said steps b) and c) are carried out in a single operation, and that the roller (22) used in said steps b) and c) is delimited at the opposite axial ends thereof by respective end portions (22b), axially and radially protruding with respect to said main portion (22a) and externally delimited by respective cylindrical surfaces (23b) defining respective shoulders (23c) with the cylindrical surface (23a) of said main portion (22a).

2. A method according to claim 1, wherein said peripheral connection portions (30) are defined by arc-shaped portions of said annular fins (26) which face one another and are crossed by said diameter (D).

3. A method according to claim 1 or 2, wherein step a) is made by a shearing operation from sheet metal.

4. A method according to any of the preceding claims, wherein said inner core (28) has a profile symmetrical with respect to said diameter (D) of said semifinished product (27) and defines, for each of said shoes (1), a second boundary side (4), facing said first side (3), and two end edges (5, 6) transversally connecting the opposite ends (7, 8) of said first side (3) with corresponding opposite ends (9, 10) of said second side (4).

5. A method according to claim 4, wherein, for each said shoe (1), said second side (4) comprises a convex intermediate segment (12) and opposite side segments (13, 14) diverging with respect to said first side (3) starting from said intermediate segment (12).

6. A method according to claim 4 or 5, wherein each shoe (1), connected to the other shoe (1) by said peripheral connection portions (30), has the end edges (5, 6) thereof facing the corresponding end edges (5, 6) of said other shoe (1).

7. The method according to any of the preceding claims, comprising, before step e), a step f) of sizing, wherein said end edges (5, 6) of each of said shoes (1) are reduced to the desired size.

## Patentansprüche

1. Ein Verfahren zum Herstellen von Bremsbacken (1) für ein Kraftfahrzeugbremssystem, wobei die Bremsbacken (1) eine kurvenförmige Streifenplatte (2) und eine kurvenförmige dünne Schicht (11) umfassen, die sich entlang einer ersten konvexen umfänglichen Grenzseite (3) der Platte (2) erstreckt und orthogonal über beide gegenüberliegende Flächen der Platte (2) vorsteht, und das Verfahren ist **dadurch gekennzeichnet, dass** es die Schritte umfasst:
a) Ausbilden einer in der Mitte perforierten kreisförmigen Scheibe (20) mit einer Achse (A),
b) radiales Vorrücken einer Walze (22) in Richtung der Scheibe (20), die eine Achse (B) parallel zur Achse (A) der Scheibe (20) aufweist und einen Hauptbereich (22a) umfasst, der durch eine äußere zylindrische Oberfläche (23a) mit einer axialen Ausdehnung begrenzt ist, die größer ist als die der Scheibe (20), und in einer Zwischenposition mit einer spitzen ringförmigen Rippe (24) bereitgestellt ist,
c) radiales Einschneiden eines umfänglichen Rands (25) der Scheibe (20) mit der Rippe (24) der Walze (22), um so das Material, das den umfänglichen Rand (25) bildet, in zwei ringförmige Flügel (26) zu teilen, die orthogonal und überhängend von entsprechenden gegenüberliegenden Flächen der Scheibe (20) vorstehen, und Erhalten eines halbfertigen scheibenförmigen Produkts (27),
d) Durchführen eines Schervorgangs, um einen inneren profilierten Kern (28) von dem halbfertigen Produkt (27) zu entfernen und zwei Bremsbacken (1) zu erhalten, die symmetrisch auf gegenüberliegenden Seiten eines vorgegebenen Durchmessers (D) des halbfertigen Produkts (27) angeordnet sind und miteinander durch umfängliche Verbindungsbereiche (30) verbunden sind, und
e) Entfernen der umfänglichen Verbindungsbereiche (30) mittels eines weiteren Schervorgangs, um zwei einzelne Bremsbacken (1) zu erhalten, und
das Verfahren ist **dadurch gekennzeichnet, dass** die Schritte b) und c) in einem einzigen Vorgang ausgeführt werden, und dass die Walze (22), die in den Schritten b) und c) verwendet wird, an den gegenüberliegenden axialen Enden davon durch entsprechende Endbereiche (22b) begrenzt ist, die axial und radial in Bezug auf den Hauptbereich (22a) vorstehen und nach außen durch entsprechende zylindrische Oberfächen (23b) begrenzt sind, die entsprechende Schultern (23c) mit der zylindrischen Oberfläche (23a) des Hauptbereichs (22a) definieren.

2. Ein Verfahren gemäß Patentanspruch 1, wobei die umfänglichen Verbindungsbereiche (30) durch bogenförmige Bereiche der ringförmigen Flügel (26) definiert sind, die einander gegenüberliegen und vom Durchmesser (D) gekreuzt werden.

3. Ein Verfahren gemäß Patentanspruch 1 oder 2, wobei Schritt a) durchgeführt wird mittels eines Schervorgangs einer dünnen Metalllage.

4. Ein Verfahren gemäß einem der vorhergehenden Patentansprüche, wobei der innere Kern (28) ein Profil aufweist, dass symmetrisch in Bezug auf den Durchmesser (D) des halbfertigen Produkts (27) ist und für jede der Bremsbacken (1) eine zweite Grenzseite (4), die der ersten Seite (3) gegenüberliegt, sowie zwei Endränder (5, 6) definiert, die die gegenüberliegenden Enden (7, 8) der ersten Seite (3) mit entsprechenden gegenüberliegenden Enden (9, 10) der zweiten Seite (4) diagonal verbinden.

5. Ein Verfahren gemäß Patentanspruch 4, wobei die zweite Seite (4) für jede der Bremsbacken (1) ein konvexes Zwischensegment (12) sowie gegenüberliegende Seitensegmente (13, 14) aufweist, die in Bezug auf die erste Seite (3) auseinanderstreben, ausgehend von dem Zwischensegment (12).

6. Ein Verfahren gemäß Patentanspruch 4 oder 5, wobei jede Bremsbacke (1) mit der anderen Bremsbacke (1) durch die umfänglichen Verbindungsbereiche (30) verbunden ist, wobei die Endränder (5, 6) davon gegenüber den entsprechenden Endrändern (5, 6) der anderen Bremsbacke (1) angeordnet sind.

7. Das Verfahren gemäß einem der vorhergehenden Patentansprüche, umfassend vor Schritt e) einen Schritt f) des Dimensionierens, wobei die Endränder (5, 6) jeder Bremsbacke (1) auf die gewünschte Größe reduziert werden.

## Revendications

1. Procédé de fabrication de patins (1) pour systèmes de freinage de véhicule à moteur, lesdits patins (1) comprenant une plaque en bande curviligne (2) et une feuille curviligne (11) s'étendant le long d'un premier côté de limite circonférentielle convexe (3) de ladite plaque (2) et faisant saillie orthogonalement depuis les deux faces opposées de la plaque (2), ledit procédé étant **caractérisé en ce qu'**il comprend les étapes consistant à :
a) former un disque circulaire (20) perforé au centre ayant un axe (A) ;
b) faire avancer radialement, vers ledit disque (20), un rouleau (22) ayant un axe (B) parallèle à l'axe (A) du disque (20) et comprenant une partie principale (22a) délimitée par une surface cylindrique externe (23a) ayant une extension axiale supérieure à celle dudit disque (20) et pourvue, dans une position intermédiaire, d'une nervure annulaire pointue (24) ;
c) inciser radialement un bord périphérique (25) dudit disque (20) avec ladite nervure (24) dudit rouleau (22) de manière à diviser le matériau formant ledit bord périphérique (25) en deux ailettes annulaires (26) faisant saillie orthogonalement et en surplomb depuis les faces opposées respectives dudit disque (20) et obtenir un produit discoïde semi-fini (27) ;
d) effectuer une opération de cisaillement pour retirer un noyau profilé intérieur (28) dudit produit semi-fini (27) et pour obtenir deux patins (1) agencés symétriquement sur les côtés opposés d'un diamètre donné (D) du produit semi-fini (27) et reliés l'un à l'autre par des parties de liaison périphériques (30) ; et
e) retirer lesdites parties de liaison périphériques (30) au moyen d'une autre opération de cisaillement afin d'obtenir deux patins de frein distincts (1) ;
ledit procédé étant **caractérisé en ce que** lesdites étapes b) et c) sont réalisées en une seule opération, et **en ce que** le rouleau (22) utilisé lors desdites étapes b) et c) est délimité aux extrémités axiales opposées de celui-ci par des parties d'extrémité respectives (22b), faisant saillie axialement et radialement par rapport à ladite partie principale (22a) et délimité extérieurement par des surfaces cylindriques respectives (23b) délimitant des épaulements respectifs (23c) avec la surface cylindrique (23a) de ladite partie principale (22a).

2. Procédé selon la revendication 1, dans lequel lesdites parties de liaison périphériques (30) sont délimitées par des parties en forme d'arc desdites ailettes annulaires (26) qui se font mutuellement face et sont coupées par ledit diamètre (D).

3. Procédé selon la revendication 1 ou 2, dans lequel l'étape a) est effectuée par une opération de cisaillement dans une tôle.

4. Procédé selon l'une quelconque des revendications précédentes, dans lequel ledit noyau intérieur (28) a un profil symétrique par rapport audit diamètre (D) dudit produit semi-fini (27) et délimite, pour chacun desdits patins de frein (1), un second côté de limite (4), faisant face audit premier côté (3), et deux bords d'extrémité (5, 6) reliant de manière transversale les extrémités opposées (7, 8) dudit premier côté (3) aux extrémités opposées correspondantes (9, 10) dudit second côté (4).

5. Procédé selon la revendication 4, dans lequel, pour chacun desdits patins (1), ledit second côté (4) comprend un segment intermédiaire convexe (12) et des segments latéraux opposés (13, 14) s'écartant dudit premier côté (3) en partant dudit segment intermédiaire (12).

6. Procédé selon la revendication 4 ou 5, dans lequel chaque patin (1), relié à l'autre patin (1) par lesdites parties de liaison périphériques (30), a ses bords d'extrémité (5, 6) faisant face aux bords d'extrémité (5, 6) correspondants dudit autre patin (1).

7. Procédé selon l'une quelconque des revendications précédentes, comprenant, avant l'étape e), une étape f) de découpe, dans laquelle lesdits bords d'extrémité (5, 6) de chacun desdits patins (1) sont réduits à la taille souhaitée.
